# EUROPEAN PATENT SPECIFICATION

(11) **EP 0 831 228 B1**
(45) Date of publication and mention of the grant of the patent: **29.01.2003**
(21) Application number: 97114858.0
(22) Date of filing: 27.08.1997
(51) Int. Cl.: F02D 41/40

(54) **Fuel injection timing control device for diesel engine**
Steuervorrichtung für den Kraftstoffeinspritzpunkt eines Dieselmotors
Dispositif de commande de l'avance d'injection pour moteur diesel

(30) Priority: 28.08.1996 JP 22627696; 29.07.1997 JP 20270997
(43) Date of publication of application: 25.03.1998
(73) Proprietor: MITSUBISHI JIDOSHA KOGYO KABUSHIKI KAISHA, Tokyo 108 (JP)
(72) Inventor: Notani, Kazuhiro, Minato-ku, Tokyo (JP); Hashimoto, Mitsuo, Minato-ku, Tokyo (JP); Yamane, Shinji, Minato-ku, Tokyo (JP)
(74) Representative: Strehl Schübel-Hopf & Partner

(56) References cited:
- EP-A- 0 657 638
- US-A- 4 819 606
- PATENT ABSTRACTS OF JAPAN vol. 013, no. 418 (M-871), 18 September 1989 (1989-09-18) & JP 01 155055 A (KUBOTA LTD), 16 June 1989 (1989-06-16)
- PATENT ABSTRACTS OF JAPAN vol. 009, no. 235 (M-415), 21 September 1985 (1985-09-21) & JP 60 090930 A (YANMAR DIESEL KK), 22 May 1985 (1985-05-22)
- PATENT ABSTRACTS OF JAPAN vol. 007, no. 261 (M-257), 19 November 1983 (1983-11-19) & JP 58 143133 A (SANWA SEIKI KK), 25 August 1983 (1983-08-25)

## Description

### BACKGROUND OF THE INVENTION

This invention relates to a fuel injection timing control device for a diesel engine which uses a distributor type fuel injection pump.

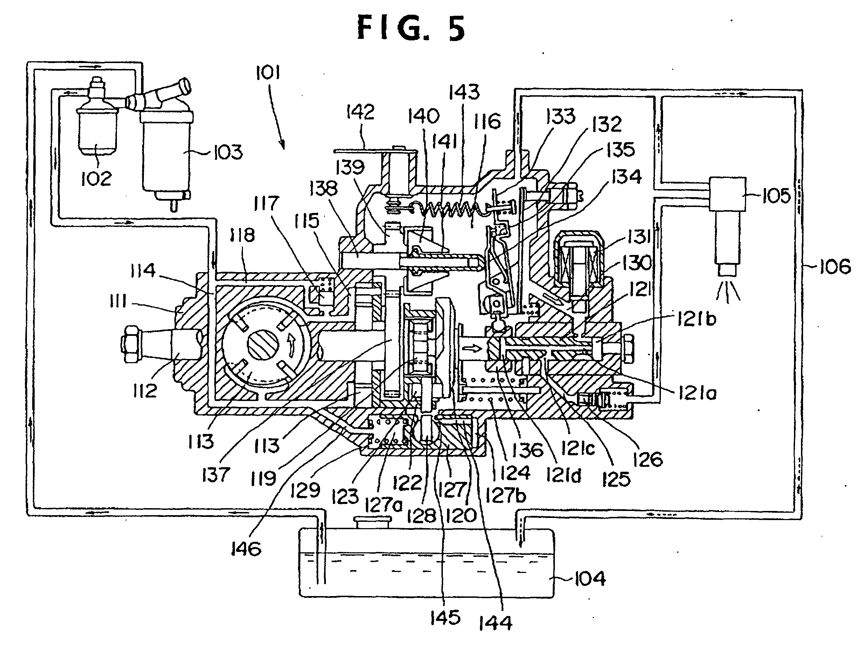

As shown in Fig. 5, a distributor type fuel injection pump 101 is mounted on a diesel engine, and supplies fuel, pressure fed by a single pumping element, by a rotating piston (plunger). To the intake side of the fuel injection pump 101, a fuel tank 104 is connected via a fuel filter 102.and a fuel/water separator 103. To the discharge side of the fuel injection pump 101, on the other hand, an injection nozzle 105 for the diesel engine (not shown) is connected so that a predetermined amount of fuel at a predetermined pressure can be pressure fed with a predetermined timing and injected from the injection nozzle 105. The fuel injection pump 101 is also provided with an overflow passageway 106 for returning overflow fuel to the fuel tank 104.

In the fuel injection pump 101, a shaft end portion of a drive shaft 112 is rotatably fitted into one side of the interior of a pump housing 111. On an intermediate part of the drive shaft 112, a feed pump 113 (shown in a 90°-developed state in Fig. 5) is mounted. To the feed pump 113, an intake passageway 114 extending from the fuel tank 104 is connected. The discharge side of the feed pump 113 is connected to a pump chamber 116 via a discharge passageway 115. At a midway part of the discharge passageway 115, a regulating valve 117 is inserted. The regulating valve 117 is connected to the intake passageway 114 via a return passageway 118.

To a front end part of the drive shaft 112, a cam plate 120 is connected via a coupling 119 so as to be integrally rotatable and relatively movable in the axial direction. To the cam plate 120, a plunger 121 is secured. The drive shaft 112 passes through the pump housing 111, and a roller ring 122 is fixed so as to lie around the outer periphery of the coupling 119. Inside the roller ring 122, a plurality of rollers 123 are pivotably attached. Between the pump housing 111 and the cam plate 120, a compression spring 124 is inserted. By the urging force of this compression spring 124, the cam plate 120 and the plunger 121 are urged axially in one direction (leftward in Fig. 5). Thus, the cam surface of the cam plate 120 is contacted with, and pressed against, the respective rollers 123 of the roller ring 122.

In the interior of the plunger 121, a fuel passageway 121a extending along the axial direction is formed, and an intake port 121b, a distribution port 121c and a spill port 121d are also formed. Thus, depending on the axial position and the circumferentially rotating position of the plunger 121, fuel in the pump chamber 116 may be sucked into the fuel passageway 121a through the intake port 121b. Alternatively, fuel sucked into the fuel passageway 121a may be discharged into a distribution passageway 125 through the distribution port 121c, or may be returned to the pump chamber 116 through the spill port 121d. The distribution passageway 125 is connected to the injection nozzle 105 via a delivery valve 126.

In a lower part of the pump housing 111, a timer piston 127 (shown in a 90°-developed state in Fig. 5) is provided so as to be movable in a direction perpendicular to the drive shaft 112, and defines a low pressure chamber 127a and a high pressure chamber 127b. The low pressure chamber 127a communicates with the intake passageway 114 extending from the fuel tank 104 via a communication passage 146. whereas the high pressure chamber 127b communicates with the pump chamber 116 via a communication passage 144 and an orifice 145. A slide pin 128 of the roller ring 122 engages the timer piston 127, and a compression spring 129 is mounted in the low pressure chamber 127a. Under the urging force of the compression spring 129, the timer piston 127 is urged axially in one direction (rightwards in Fig. 5). Thereby, the roller ring 122 is turned circumferentially to delay the injection timing by the plunger 121. An intake groove 130 of the pump housing 111 is provided with a fuel cut solenoid 131.

On a side part of the pump housing 111, a governor lever 132 is mounted. To the governor lever 132, a tension lever 133 and a control lever 134 are pivotably attached. Between upper parts of the tension lever 133 and the control lever 134, a compression spring 135 is interposed. At the same time, a lower part of the control lever 134 engages a spill ring 136 which is fitted over the plunger 121. To the drive shaft 112, a driving gear 137 is secured. The driving gear 137 meshes with a driven gear 139 of a governor shaft 138. Over the governor shaft 138, a governor sleeve 141 is fitted movably via a flyweight 140. On an upper part of the pump housing 111, an adjusting lever (accelerator lever) 142 is mounted. Between the adjusting lever 142 and the tension lever 133, a tension spring 143 is provided. The urging force of the tension spring 143 brings the control lever 134 into contact with a front end part of the governor sleeve 141.

When the diesel engine is driven, therefore, its half rotation results in the driving rotation of the drive shaft 112. As the feed pump 113 is rotated, fuel is pressure fed by a low pressure pump (not shown) provided in the fuel tank 104. Then, the fuel is fed through the discharge passageway 115 to the pump chamber 116, with the fuel pressure being controlled by the regulating valve 117 so that the fuel pressure of the high-pressure fuel pressure fed by the feed pump 113 to the pump chamber 116 will be kept at a predetermined value. On the other hand, the plunger 121 is rotated by the cam plate 120 connected to the drive shaft 112 by the coupling 119. The cam plate 120 has the same number of face cams as the number of cylinders of the engine. When the cam plate 120 is rotated by the drive shaft 112, it reciprocates by the amount of cam lift on the respective rollers 123 attached to the roller ring 122. Thus, the plunger 121 connected to the cam plate 120 makes a rotary movement and a reciprocating movement.

That is, the intake of fuel is performed when the intake groove 130 and the intake port 121b align during the lowering of the plunger 121. Then, the plunger 121 rotates to bring the distribution port 121c and the distribution passageway 125 into alignment. At this time, fuel passes through the delivery valve 126, and is injected from the injection nozzle 105. When the spill ring 136 is opened by the control lever 134, fuel in the plunger 121 is released to the pump chamber 116 through the spill port 121d, so that the fuel injection quantity is controlled. On this occasion, injection is completed. The fuel pressure of the pump chamber 116 acts on the high pressure chamber 127b via the communication passage 144 and the orifice 145, increasing the fuel pressure of the high pressure chamber 127b. As a result, the timer piston 127 is moved in a direction in which it compresses the spring 129. Thus, the timer piston 127 rotates the roller ring 122 to advance its angle, thereby controlling the injection timing. When an ignition switch (not shown) is turned off, the electric current to the fuel cut solenoid 131 is interrupted to close the distribution passageway 125, cutting off the fuel.

With the above-described conventional distributor type fuel injection pump 101, the fuel pressure inside the fuel tank 104 acts on the low pressure chamber 127a of the timer piston 127 through the intake passageway 114. Whereas the discharge fuel pressure by the feed pump 113 (the fuel pressure of the pump chamber 116) acts on the high pressure chamber 127b of the timer piston 127. In accordance with the movement of the timer piston 127, the roller ring 122 is rotated so that its angle is advanced or retarded, whereby the injection timing is controlled. In recent years, an electronically controlled fuel injection pump 101 has been proposed. In this case, a bypass passageway may be provided between the low pressure chamber 127a and the high pressure chamber 127b of the timer piston 127, and an electromagnetic valve may be inserted in the bypass passageway. Depending on the run state of the engine, the electromagnetic valve is actuated to duty drive the bypass passageway, thereby moving the timer piston 127. Consequently, the injection timing can be controlled elaborately.

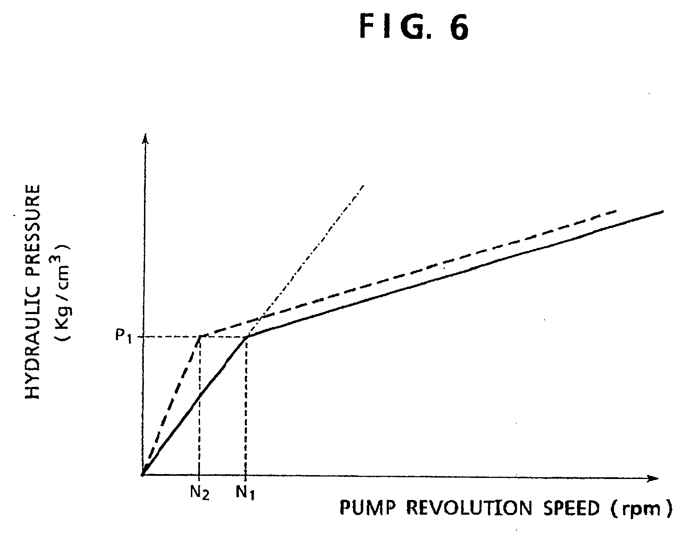

By the way, when the feed pump 113 is rotated, fuel is supplied to the pump chamber 116. For this supply, the fuel pressure is controlled by the regulating valve 117. That is, as shown in Fig. 6, as the revolution speed of the feed pump 113 is increased, the fuel pressure of the pump chamber 116 is raised as indicated by a one-dot chain line. However, this fuel pressure is controlled as indicated by a solid line because of its control by the regulating valve 117. In this case, when the revolution speed of the feed pump 113 is N₁, the fuel pressure is P₁ at which the injection timing can be controlled. In recent years, there has been a demand that this control be performed while the engine is making revolutions at a lower speed, namely, that the pressure of the pump chamber 116 be kept high even at a low revolution speed. To meet this demand, a check valve is provided at the junction of the pump chamber 116 in the pump housing 111 and the overflow passageway 106. By this measure, an overflow of fuel is suppressed until a predetermined pressure is achieved when the interior of the pump chamber 116 is pressurized by the feed pump 113. Consequently, as indicated by a dashed line in Fig. 6, when the revolution speed of the feed pump 113 increases and reaches N₂, a value lower than N₁, the fuel pressure is P₁ at which the injection timing can be controlled.

Generally, when the ignition key switch is turned off to stop the engine, the high pressure fuel in the pump chamber 116 is caused to overflow through the overflow passageway 106, whereby the fuel pressure of the pump chamber 116, i.e., the high pressure chamber 127b, is lowered. Thus, the urging pressure of the compression spring 129 provided in the low pressure chamber 127a of the timer piston 127 moves the timer piston 127 toward the high pressure chamber 127b. When the engine is stopped, however, the bypass passageway may be closed by the electromagnetic valve that duty controls the timer piston 127. At a low temperature, in particular, depending on the function of the regulating valve 117 and the check valve, the high pressure fuel in the pump chamber 116 fails to be sufficiently released, with the result that the timer piston 127 may not return to the injection timing position at starting. At a low temperature, furthermore, the viscosity of fuel is so large that the resistance between the timer piston 127 and the corresponding outer wall portion may easily increase, and thus the timer piston 127 may not return to the injection timing position at starting. In this condition in which the timer piston 127 does not return to the injection timing position at starting, there has been the problem that when the ignition key switch is turned on, the startability of the engine declines.

Japanese Laid-Open Utility Model Publication No. 35759/95 discloses an example of the foregoing distributor type fuel injection pump in which when the ignition switch is turned off, the internal pressure of fuel filling up the pump chamber is simultaneously lowered. This pump has a bypass passageway communicating from the discharge side to the intake side of the feed pump. When the ignition switch is turned off, the piston of the regulating valve of the fuel injection pump is pushed upwards to open the bypass passageway. As a result, the internal pressure of the fuel filling up the pump chamber is lowered for a fuel cutoff.

According to the system disclosed in this publication, when the ignition switch is turned off, the bypass passageway of the regulating valve can be opened to lower the fuel pressure inside the pump chamber. However, an orifice is interposed between the pump chamber and the nigh pressure chamber of the timer piston in order to prevent the decline in the control accuracy of the injection timing owing to the pulsation of the fuel pressure and its associated fine movement of the timer piston. Even when the fuel pressure inside the pump chamber has been reduced, therefore, it is difficult to release the fuel in the high pressure chamber of the timer piston to the pump chamber. This leads to insufficient reliability.

With a direct injection diesel engine involving the direct supply of fuel, injected from the injection nozzle, into the combustion chamber, the profile of a face cam provided on the cam plate tends to be heightened in order to increase the injection pressure. Hence, when the cam plate rotates and the face cam passes over the roller, an external force which vibrates the timer piston position is apt to become high. Conventionally, the orifice diameter has been made smaller than in a diesel engine with a relatively low profile of the face cam, thereby preventing the vibration from increasing because of a rapid effect of the fuel pressure on the high pressure chamber. In the direct infection diesel engine with a high face cam profile, therefore, even the decrease in the fuel pressure in the pump chamber has resulted in a very difficult, less reliable release of the fuel in the high pressure chamber of the timer piston into the pump chamber.

In addition, the capacity of the pump chamber is large compared with the high pressure chamber of the timer piston. Thus, release of the fuel in the high pressure chamber of the timer piston into the pump chamber takes a long time. During this period, the regulating valve is continuously driven, thereby increasing the electric power consumption of the battery.

### SUMMARY OF THE INVENTION

The present invention aims to solve the above-described problems. Its object is to provide a fuel injection timing control device for a diesel engine, the control device having a simple and low-cost structure and reliably locating the timer piston at the injection timing position at starting, thereby improving startability.

A fuel injection timing control device for a diesel engine, as a first aspect of the invention for attaining the above object, comprises a feed pump for sucking up and feeding a constant amount of fuel from fuel stored in a fuel tank; a pump chamber for adjusting the fuel fed from the feed pump to a predetermined fuel pressure, a pump plunger for taking in a predetermined amount of fuel from the pump chamber and distributing and pressure feeding it to injection nozzles; a timer piston for controlling the fuel injection timing by the pump plunger, the timer piston having a low pressure chamber communicating with the upstream side of the feed pump and a high pressure chamber communicating with the pump chamber; a bypass passageway for establishing communication between the low pressure chamber and the high pressure chamber of the timer piston; a control valve for controlling the opening and closing state of the bypass passageway; and a fuel injection timing changing means which, when the engine is stopped, opens the bypass passageway by means of the control valve to allow the low pressure chamber and the high pressure chamber of the timer piston to communicate with each other for a predetermined time, thereby shifting the timer piston to the injection timing position at starting.

When the feed pump is driven, therefore, fuel stored in the fuel tank is sucked up in a constant amount and fed to the pump chamber. There, the fuel is adjusted to a predetermined fuel pressure. By the driving action of the pump plunger, a predetermined amount of the fuel in the pump chamber is taken in, distributed and pressure fed to the injection nozzles. At this time, the timer piston controls the pump plunger-based fuel injection timing by relying on the pressure difference between the low pressure chamber communicating with the upstream side of the feed pump and the high pressure chamber communicating with the pump chamber. On stoppage of the engine, the bypass passageway is opened by the control valve to permit a predetermined time of communication between the low pressure chamber and the high pressure chamber of the timer piston. As a result, the timer piston is returned to the injection timing position at starting, whereby the fuel injection timing by the pump plunger is changed to the injection timing position at starting. At the time of a next engine starting, the engine is started reliably.

According to the fuel injection timing control device for a diesel engine, as a second aspect of the invention, the fuel injection timing changing means shifts the timer piston to a maximum retard angle position.

Thus, the timer piston is returned to the maximum retard angle position, whereby the fuel injection timing by the pump plunger is changed to the maximum retard angle position. At the time of a next engine starting, the engine is started reliably.

According to the fuel injection timing control device for a diesel engine, as a third aspect of the invention, the pump chamber and the high pressure chamber communicate with each other via a restrictor.

The presence of the restrictor gives the following advantage: Even in the fuel injection pump in which the fuel pressure of the high pressure chamber of the timer piston minimally lowers after a drop in the fuel pressure of the pump chamber, the timer piston is promptly returned to the injection timing position at starting. Thus, the electric power consumption of the battery is reduced, and the fuel injection timing by the pump plunger is changed to the injection timing position at starting. With the battery under protection, the engine is started reliably at the time of a next engine starting.

According to the fuel injection timing control device for a diesel engine, as a fourth aspect of the invention, a regulating valve for adjusting the fuel feed pressure of the feed pump is provided between the feed pump and the pump chamber, and an overflow valve is provided in a passageway for fuel return from the pump chamber to the fuel tank.

Thus, even when the regulating valve and the overflow valve are closed, the timer piston can be reliably moved to the injection timing position at starting, whereby the fuel injection timing by the pump plunger can be changed to the injection timing position at starting.

According to the fuel injection timing control device for a diesel engine, as a fifth aspect of the invention, a piston position detecting means is provided for detecting the position of the timer piston, and when the piston position detecting means detects that the timer piston position has become the injection timing position at starting, the shifting of the timer piston position by the fuel injection timing changing means is stopped.

Thus, the fuel injection timing changing means can be controlled based on the communicating time or the actual timer piston position. This prevents the increase in the electric power consumption of the battery by excessive control of the injection timing changing means, as well as the insufficiency of the retard angle of the timer piston due to the insufficiency of the control of the injection timing changing means. At the same time, the timer piston is returned to the injection timing position at starting, whereby the fuel injection timing by the pump plunger is changed to the injection timing position at starting. Thus, the engine is started reliably at the time of a next engine starting.

A fuel injection timing control device for a diesel engine, as a sixth aspect of the invention for attaining the above object, comprises a feed pump for sucking up and feeding a constant amount of fuel from fuel stored in a fuel tank; a pump chamber for adjusting the fuel fed from the feed pump to a predetermined fuel pressure; a pump plunger for taking in a predetermined amount of fuel from the pump chamber and distributing and pressure feeding it to injection nozzles; a timer piston for controlling the fuel injection timing by the pump plunger, the timer piston having a low pressure chamber communicating with the upstream side of the feed pump and a high pressure chamber communicating with the pump chamber; a bypass passageway for establishing communication between the low pressure chamber and the high pressure chamber of the timer piston; a control valve for controlling the opening and closing state of the bypass passageway; piston position detecting means for detecting the position of the timer piston; and fuel injection timing changing means which, when the engine is stopped, opens the bypass passageway by means of the control valve to allow the low pressure chamber and the high pressure chamber of the timer piston to communicate with each other until a maximum retard angle position of the timer piston is detected by the piston position detecting means.

Thus, the injection timing changing means can be controlled based on the actual timer piston position. This prevents the increase in the electric power consumption of the battery by excessive control of the injection timing changing means, as well as the insufficiency of the retard angle of the timer piston due to the insufficiency of the control of the injection timing changing means. At the same time, the timer piston is returned to the maximum retard angle position, whereby the fuel injection timing by the pump plunger is changed to the maximum retard angle position. Thus, the engine is started reliably at the time of a next engine starting.

### BRIEF DESCRIPTION OF THE DRAWINGS

Fig. 1 is a schematic block diagram of a fuel injection timing control device for a diesel engine concerned with an embodiment of the present invention;
Fig. 2 is a schematic sectional view of a fuel injection pump;
Fig. 3 is a flow chart for control by the fuel injection timing control device;
Fig. 4 is a flow chart for control by a fuel injection timing control device concerned with another embodiment;
Fig. 5 is a schematic structural view of a conventional fuel injection timing control device for a diesel engine; and
Fig. 6 is a graph showing the fuel pressure as a function of the pump revolution speed in a conventional fuel injection pump.

### DETAILED DESCRIPTION OF THE PREFERRED EMBODIMENTS

Embodiments of the present invention will be described in detail with reference to the appended drawings.

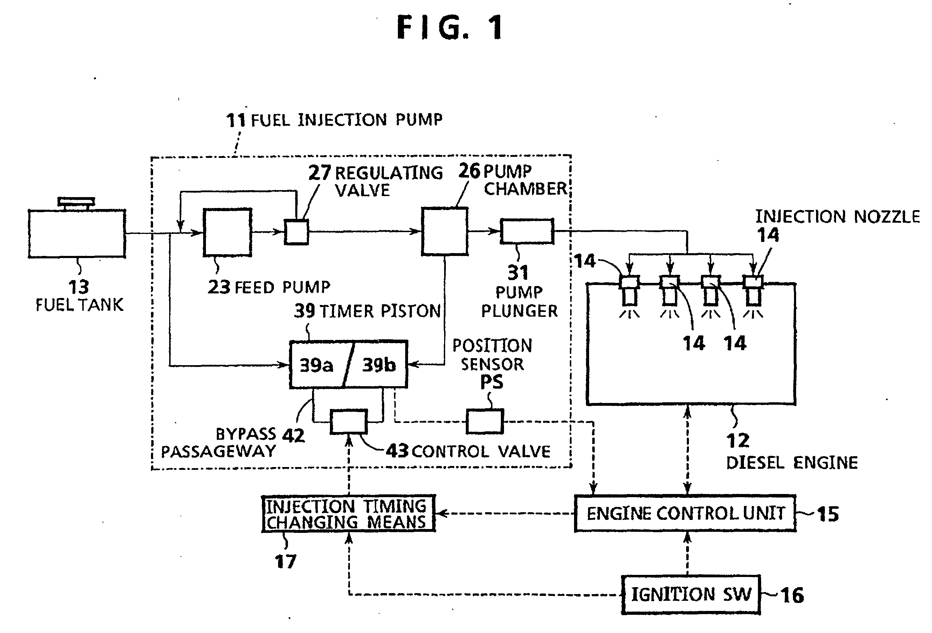

In a fuel injection timing control device for a diesel engine according to the instant embodiment, as shown in Fig. 1, a distributor type fuel injection pump 11 is mounted on a diesel engine 12. To the intake side of the fuel injection pump 11, a fuel tank 13 is connected, so that fuel stored in the fuel tank 13 can be sucked up in a predetermined amount. To the discharge side of the fuel injection pump 11, on the other hand, injection nozzles 14 of the diesel engine 12 are connected so that a predetermined amount of fuel at a predetermined pressure can be pressure fed with a predetermined timing and injected from each injection nozzle 14. To the diesel engine 12, an engine control unit 15 is connected. Based on the engine run-state of the engine control unit 15 and the operation of an ignition switch 16, an injection timing changing means 17 is controlled, whereby the fuel injection timing by the fuel injection pump 11 can be changed.

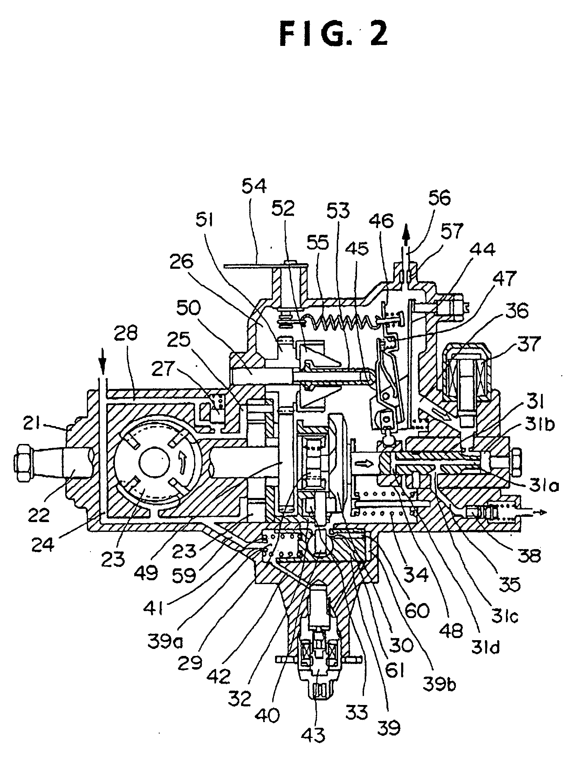

The fuel injection pump 11 is described in detail here. As shown in Fig. 2, a shaft end portion of a drive shaft 22 is rotatably fitted into one side of the interior of a pump housing 21. On an intermediate part of the drive shaft 22, a feed pump 23 (shown in a 90°-developed state in Fig. 2) is mounted. To the feed pump 23, an intake passageway 24 extending from the fuel tank 13 is connected. The discharge side of the feed pump 23 is connected to a pump chamber 26 via a discharge passageway 25. At a midway part of the discharge passageway 25, a regulating valve 27 is disposed. The regulating valve 27 is connected to the intake passageway 24 via a return passageway 28.

To a front end part of the drive shaft 22, a cam plate 30 is connected via a coupling 29 so as to be integrally rotatable and relatively movable in the axial direction. To the cam plate 30, a plunger 31 is secured. The drive shaft 22 passes through the pump housing 21, and a roller ring 32 is fixed so as to lie around the outer periphery of the coupling 29. Inside the roller ring 32, a plurality of rollers 33 are pivotably·mounted. Between the pump housing 21 and the cam plate 30, a compression spring 34 is interposed. By the urging force of this compression spring 34, the cam plate 30 and the plunger 31 are urged axially in one direction (leftward in Fig. 2). Thus, the cam surface of the cam plate 30 is pressed against the respective rollers 33 of the roller ring 32.

In the interior of the plunger 31, a fuel passageway 31a extending along the axial direction is formed, and an intake port 31b, a distribution port 31c and a spill port 31d are also formed. Thus, depending on the axial position and the circumferentially rotating position of the plunger 31, fuel in the pump chamber 26 may be sucked into the fuel passageway 31a through the intake port 31b. Alternatively, fuel sucked into the fuel passageway 31a may be discharged into a distribution passageway 35 through the distribution port 31c, or may be returned to the pump chamber 26 through the spill port 31d. An intake groove 36 of the pump housing 31 is provided with a fuel cut solenoid 37, and the distribution passageway 35 is connected to the injection nozzles 14 via a delivery valve 38.

In a lower part of the pump housing 21, a timer piston 39 (shown in a 90°-developed state in Fig. 2) is provided so as to be movable in a direction perpendicular to the drive shaft 22, and defines a low pressure chamber 39a and a high pressure chamber 39b. The low pressure chamber 39a communicates with the intake passageway 24 extending from the fuel tank 13 via a communication passage 59. Whereas the high pressure chamber 39b communicates with the pump chamber 26 via a communication passage 60 and an orifice 61. A slide pin 40 of the roller ring 32 engages the timer piston 39, and a compression spring 41 is mounted in the low pressure chamber 39a. Under the urging force of the compression spring 41, the timer piston 39 is urged axially in one direction (rightwards in Fig. 2). Thereby, the roller ring 32 is turned circumferentially to delay the injection timing by the plunger 31.

The timer piston 39 is provided with a bypass passageway 42 for communication between the low pressure chamber 39a and the high pressure chamber 39b, and is also provided with a control valve 43 for opening and closing the bypass passageway 42. The aforementioned injection timing changing means 17 controls the electricity turn-on time of the control valve 43 in accordance with the run state of the engine to control the communication state of the bypass passageway 42. As a result, communication between the low pressure chamber 39a and the high pressure chamber 39b is controlled, whereupon the fuel injection timing by the fuel injection pump 11 can be controlled. The injection timing changing means 17 also opens the bypass passageway 42 by the control valve 43 when the engine is stopped. Consequently, the low pressure chamber 39a and the high pressure chamber 39b of the timer piston 39 are made to communicate for a predetermined time. Thus, the timer piston 39 can be brought to the injection timing position at starting (with a diesel engine, this position is often set to be nearly the maximum retard angle position for improved startability). This means that the fuel injection timing by the pump plunger 31 can be changed to the injection timing position at starting.

On a side part of the pump housing 21, a governor lever 44 is mounted. To the governor lever 44, a tension lever 45 and a control lever 46 are pivotably attached. Between upper parts of the tension lever 45 and the control lever 46, a compression spring 47 is interposed. At the same time, a lower part of the control lever 46 engages a spill ring 48 which is fitted over the plunger 31. To the drive shaft 22, a driving gear 49 is secured. The driving gear 49 meshes with a driven gear 51 of a governor shaft 50. Over the governor shaft 50, a governor sleeve 53 is fitted movably via a flyweight 52. On an upper part of the pump housing 21, an adjusting lever (accelerator lever) 54 is mounted. Between the adjusting lever 54 and the tension lever 45, a tension spring 55 is provided. The urging force of the tension spring 55 brings the control lever 46 into contact with a front end part of the governor sleeve 53.

The pump housing 21 of the fuel injection pump 11 is also provided with an overflow passageway 56 for returning overflow fuel from the pump chamber 26 to the fuel tank 13. At the junction of the overflow passageway 56 and the pump chamber 26, an overflow valve 57 is provided.

A description will be offered of fuel injection control by the fuel injection timing control device for a diesel engine according to the instant embodiment.

As shown in Figs. 1 and 2, when the ignition switch 16 is turned on, the diesel engine 12 is driven. Its half rotation results in the driving rotation of the drive shaft 22, accompanied by the rotational driving of the feed pump 23. As the feed pump 23 is rotationally driven, fuel is fed to the pump chamber 26 via the discharge passageway 25, with the fuel pressure being controlled by the regulating valve 27. On the other hand, the plunger 31 is rotated by the cam plate 30 connected to the drive shaft 22 by the coupling 29. The cam plate 30 has the same number of face cams as the number of cylinders of the engine 12. When the cam plate 30 is rotated by the drive shaft 22, only the cam lift reciprocates on the respective rollers 33 attached to the roller ring 32. Thus, the plunger 31 connected to the cam plate 30 makes a rotary movement and a reciprocating movement.

That is, when the plunger 31 enters a downward stroke, the intake groove 36 and the intake port 31b align, so that fuel in the pump chamber 26 is sucked into the-fuel passageway 31a through the intake groove 36 and the intake port 31b. As the plunger 31 rotates, the intake port 31b closes, and the distribution port 31c and the distribution passageway 35 come into alignment. When the plunger 31 also moves in the axial direction because of the cam face of the cam plate 30, the fuel in the plunger 31 increases in pressure. The pressurized fuel is passed through the delivery valve 38, and fed to the injection nozzles 14, which begin injection. upon a further movement of the plunger 31 by the cam face of the cam plate 30, the spill port 31d goes outside the range of its interference with the spill ring 48. Thus, the spill port 31d opens, whereupon the fuel in the plunger 31 is released to the pump chamber 26 through the spill port 31d. At this time, injection ends.

When the adjusting lever 54 is turned, the spill ring 48 is moved by the action of the governor lever 44, tension lever 45 and control lever 46, so that the effective stroke of the plunger 31 changes. That is, when the spill ring 48 is moved leftward in Fig. 2, the opening of the spill port 31d is expedited, so that the amount of fuel pressure fed becomes small. When the spill ring 48 is moved rightward in Fig. 2, on the other hand, the opening of the spill port 31d is delayed, so that the amount of fuel pressure fed becomes large. This way, the amount of fuel injection can be controlled.

Furthermore, the compression spring 41 is mounted in the low pressure chamber 39a of the timer piston 39. The urging force of the compression spring 41 urges the timer piston 39 in one direction, whereby the roller ring 32 is turned circumferentially to delay the injection timing by the plunger 31. The fuel pressure of the pump chamber 26 acts on the high pressure chamber 39b of the timer piston 39 via the communication passage 60 and orifice 61. Thus, when the revolutions of the engine 12 increase and the discharge pressure of the feed pump 23 rises, the timer piston 39 moves against the urging force of the compression spring 41. Thus, the timer piston 39 rotates the roller ring 32 to advance its angle, thereby making it possible to control the injection timing. When the electricity turn-on time of the control valve 43 is shortened, the fuel pressure of the high pressure chamber 39b increases to advance the angle. When the electricity turn-on time of the control valve 43 is prolonged, the fuel pressure of the high pressure chamber 39b decreases to retard the angle. Thus, the fuel injection timing can be controlled.

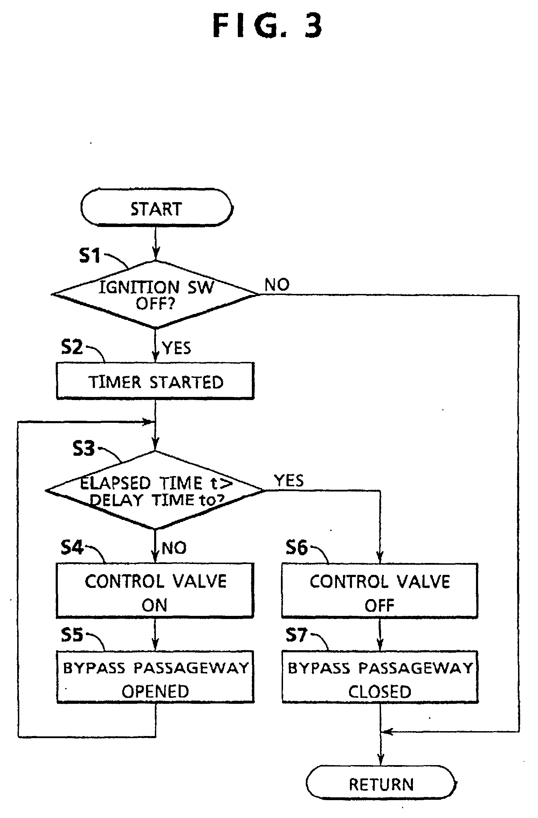

When the ignition switch is turned off to stop the engine 12, the control valve 43 opens the bypass passageway 42, causing the low pressure chamber 39a and the high pressure chamber 39b of the timer piston 39 to communicate for a predetermined period of time. Thus, the timer piston 39 can be returned to the injection timing position at starting. That is, as shown in Fig. 3, it is determined at step S1 whether the ignition switch was turned off at this cycle. If the ignition switch is ON, the initial state is resumed. If the ignition switch is OFF at the step S1, the procedure goes to step S2 to start the timer. At step S3, it is determined whether the elapsed time t since the start of the timer is more than a preset delay time t₀. At step S4, the control valve 43 is turned on. At step S5, the bypass passageway 42 is opened, whereafter the procedure returns to step S3. At these steps S3, S4 and S5, the indicated processings are repeated until the elapsed time t exceeds the delay time t₀. When the elapsed time t has exceeded the delay time t₀, it is determined that the timer piston 39 has retarded in angle to the ignition timing position at starting. At step S6, the control valve 43 is turned off. At step S7, the bypass passageway 42 is closed.

As noted above, when the ignition switch 16 is turned off to stop the engine 12, the control valve 43 opens the bypass passageway 42, causing the low pressure chamber 39a and the high pressure chamber 39b of the timer piston 39 to communicate for a predetermined period of time. Thus, the differential pressure existing between the low pressure chamber 39a and the high pressure chamber 39b (pump chamber 26) rapidly vanishes. Under the urging force of the compression spring 41, the timer piston 39 moves to the ignition timing position at starting, thereby permitting the fuel ignition timing to be changed to the ignition timing position at starting by the plunger 31 via the roller ring 32. Furthermore, load on the battery can be decreased, and battery deterioration can be diminished.

In the above embodiment, when the engine 12 is stopped, electricity is passed through the control valve 43 for a predetermined time to open the bypass passageway 42. As a result, the low pressure chamber 39a and the high pressure chamber 39b of the timer piston 39 are caused to communicate for a predetermined period of time. Thus, the timer piston 39 is returned to the ignition timing position at starting by the urging force of the compression spring 41. However, a position sensor may be mounted on the timer piston 39, and the electricity turn-on time of the control valve 43 may be controlled based on the results of detection by the position sensor.

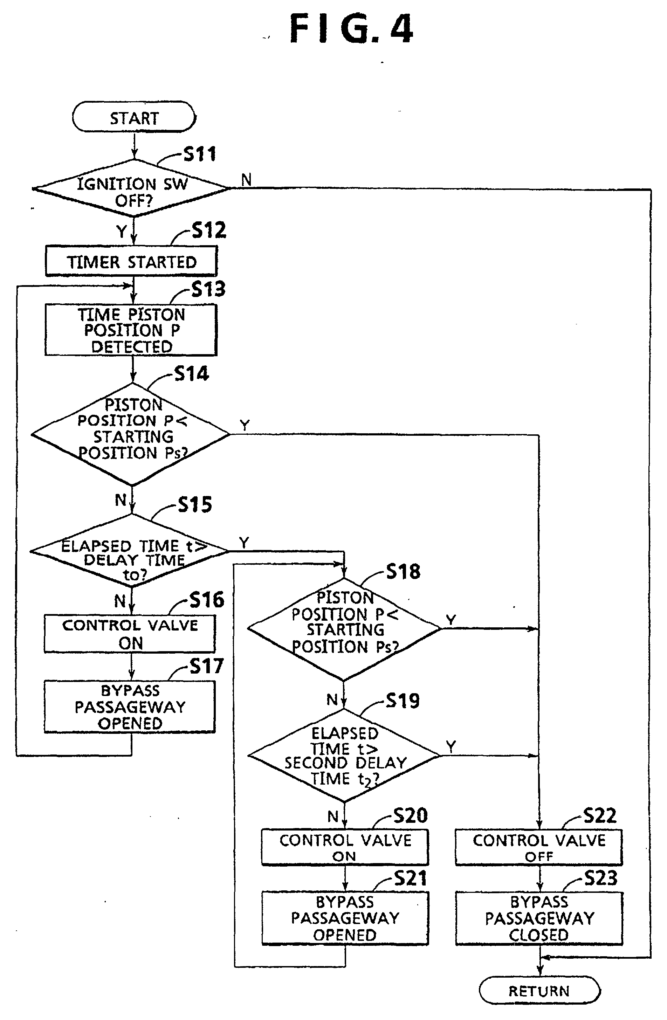

Fig. 4 shows a flow chart for control by a fuel injection timing control device concerned with another embodiment.

As shown in Fig. 4, it is determined at step S11 whether the ignition switch was turned off at this cycle. If the ignition switch is ON, the initial state is resumed. If the ignition switch is OFF at the step S11, the procedure goes to step S12 to start the timer. At step S13, the current position P of the timer piston 39 is detected by a position sensor PS (piston position detecting means; see Fig. 1). At step S14, it is determined whether the current position P of the timer piston 39 is smaller than the starting position Ps (retarded in angle). If the current position P of the timer piston 39 is smaller than the starting position Ps, it is determined that the timer piston 39 has been retarded in angle to the injection timing position at starting. Thus, the procedure goes to step S22. At the step S22, the control valve 43 is turned off. At step S23, the bypass passageway 42 is closed.

If, at the step S14, the current position P of the timer piston 39 is larger than the starting position Ps, it is determined that the timer piston 39 has not been retarded in angle to the injection timing position at starting. At step S15, it is determined whether the elapsed time t since the start of the timer is more than a preset delay time t₀. At step S16, the control valve 43 is turned on. At step S17, the bypass passageway 42 is opened, whereafter the procedure returns to step S13. At these steps S13, S14, S15, S16 and S17, the indicated processings are repeated until the timer piston position P exceeds the starting position Ps, or the elapsed time t exceeds the delay time t₀. When the elapsed time t has exceeded the delay time t₀, the procedure goes to step S18.

At the Step S18, it is determined again whether the current position P of the timer piston 39 is smaller than the starting position Ps. If the current position P of the timer piston 39 is smaller than the starting position Ps, it is determined that the timer piston 39 has been retarded in angle to the injection timing position at starting. Then, as steps S22 and S23, the control valve 43 is turned off, and the bypass passageway 42 is closed, respectively. If, at step S18, the current position P of the timer piston 39 is larger than the starting position Ps, it is determined that the timer piston 39 has not been retarded in angle to the injection timing position at starting. At step S19, it is determined whether the elapsed time t since the start of the timer is more than a second delay time t₂ which has been set to be longer than the delay time t₀. If the elapsed time t is less than the second delay time t₂, the control valve 43 is turned on at step S20. At step S21, the bypass passageway 42 is opened. Then, the step S18 is resumed. At these steps S18, S19, S20, and S21, the indicated processings are repeated until the timer piston position P exceeds the starting position Ps, or the elapsed time t exceeds the second delay time t₂. When the elapsed time t has exceeded the second delay time t₂, it is determined that the electric power consumption of the battery has become large. In this case, regardless of the position P of the timer piston 39, the control valve 43 is turned off, and the bypass passageway 42 is closed at steps S22 and S23, respectively. Thereby, a large electric power consumption of the battery is prevented.

The foregoing constitution provides the following advantages: At a low temperature, for example, the viscosity of fuel is so large that the resistance between the timer piston 39 and the corresponding outer wall portion may increase, making it difficult for the timer piston 39 to return to the injection timing position at starting or the maximum retard angle position. Even in this case, the timer piston 39 can reliably be returned to the injection timing position at starting or the maximum retard angle position by controlling the control valve 43 based on the timer piston position. Even if the drag between the timer piston 39 and the corresponding outer wall portion results in the failure of the timer piston 39 to return to the injection timing position at starting or the maximum retard angle position, the increase in the electric power consumption of the battery can be prevented by controlling the control valve 43 based on the timer piston position.

As described above, the foregoing embodiments of the present invention confer various advantages. According to the fuel injection timing control device for a diesel engine, as the first aspect of the invention, the bypass passageway is opened upon stoppage of the engine to permit a predetermined time of communication between the low pressure chamber and the high pressure chamber. As a result, the fuel pressure of the high pressure chamber is released via the low pressure chamber, whereby the timer piston is moved to the injection timing position at starting. Thus, the fuel injection timing by the pump plunger can be changed to the injection timing position at starting. Hence, a simple and low-cost structure and a short-term, reliable positioning of the timer piston at the injection timing position at starting can improve startability.

According to the fuel injection timing control device for a diesel engine, as the second aspect of the invention, the timer piston is returned to the maximum retard angle position, whereby the fuel injection timing by the pump plunger is changed to the maximum retard angle position. At the time of a next engine starting, the engine can be started reliably.

According to the fuel injection timing control device for a diesel engine, as the third aspect of the invention, there is a restrictor between the pump chamber and the high pressure chamber, thus presenting the following advantages: Even in the fuel injection pump in which the fuel pressure of the high pressure chamber of the timer piston minimally lowers after a drop in the fuel pressure of the pump chamber, the timer piston is promptly returned to the injection timing position at starting. Thus, the electric power consumption of the battery is reduced, and the fuel injection timing by the pump plunger is changed to the injection timing position at starting. With the battery under protection, the engine can be started reliably at the time of a next engine starting.

According to the fuel injection timing control device for a diesel engine, as the fourth aspect of the invention, the following advantages are obtained: Even when the regulating valve and the overflow valve are closed upon stoppage of the engine, the timer piston can be reliably moved to the injection timing position at starting, whereby the fuel injection timing by the pump plunger can be changed to the injection timing position at starting.

According to the fuel injection timing control device for a diesel engine, as the fifth aspect of the invention, the fuel injection timing changing means can be controlled based on the actual timer piston position. This prevents the increase in the electric power consumption of the battery by excessive control of the injection timing changing means, as well as the insufficiency of the retard angle of the timer piston due to the insufficiency of the control of the injection timing changing means. At the same time, the timer piston is returned to the injection timing position at starting, whereby the fuel injection timing by the pump plunger is changed to the injection timing position at starting. Thus, the engine can be started reliably at the time of a next engine starting.

According to the fuel injection timing control device for a diesel engine, as the sixth aspect of the invention, the injection timing changing means can be controlled based on the actual timer piston position. This prevents the increase in the electric power consumption of the battery by excessive control of the injection timing changing means, as well as the insufficiency of the retard angle of the timer piston due to the insufficiency of the control of the injection timing changing means. At the same time, the timer piston is returned to the maximum retard angle position, whereby the fuel injection timing by the pump plunger is changed to the maximum retard angle position. Thus, the engine can be started reliably at the time of a next engine starting.

## Claims

1. A fuel injection timing control device for a diesel engine comprising:
a feed pump (23) for sucking up and feeding a constant amount of fuel from fuel stored in a fuel tank (13);
a pump chamber (26) for adjusting the fuel fed from the feed pump (23) to a predetermined fuel pressure;
a pump plunger (31) for taking in a predetermined amount of fuel from the pump chamber (26) and distributing and pressure feeding it to injection nozzles (14);
a timer piston (39) for controlling the fuel injection timing by the pump plunger (31), said timer piston (39) having a low pressure chamber (39a) communicating with the upstream side of the feed pump (23) and a high pressure chamber (39b) communicating with the pump chamber (26);
a bypass passageway (42) for establishing communication between the low pressure chamber (39a) and the high pressure chamber (39b) of the timer piston (39);
a control valve (43) for controlling the opening and closing state of the bypass passageway (42); and
fuel injection timing changing means (17) which, when the engine is stopped, opens the bypass passageway (42) by means of the control valve (43) to allow the low pressure chamber (39a) and the high pressure chamber (39b) of the timer piston (39) to communicate with each other for a predetermined time, thereby shifting the timer piston (39) to the injection timing position at starting.

2. The device of claim 1, wherein the fuel injection timing changing means (17) shifts the timer piston (39) to a maximum retard angle position.

3. The device of claim 1, wherein the pump chamber (26) and the high pressure chamber (39b) communicate with each other via a restrictor (61).

4. The device of claim 1, wherein a regulating valve (27) for adjusting the fuel feed pressure of the feed pump (23) is provided between the feed pump (23) and the pump chamber (26), and an overflow valve (57) is provided in a passageway for fuel return from the pump chamber (26) to the fuel tank (13).

5. The device of claim 1, wherein piston position detecting means (PS) is provided for detecting the position of the timer piston (39), and when the piston position detecting means (PS) detects that the timer piston position has become the injection timing position at starting, the shifting of the timer piston position by the fuel injection timing changing means (17) is stopped.

6. A fuel injection timing control device for a diesel engine comprising:
a feed pump (23) for sucking up and feeding a constant amount of fuel from fuel stored in a fuel tank (13);
a pump chamber (26) for adjusting the fuel fed from the feed pump (23) to a predetermined fuel pressure;
a pump plunger (31) for taking in a predetermined amount of fuel from the pump chamber (26) and distributing and pressure feeding it to injection nozzles (14);
a timer piston (39) for controlling the fuel injection timing by the pump plunger (31), said timer piston (39) having a low pressure chamber (39a) communicating with the upstream side of the feed pump (23) and a high pressure chamber (39b) communicating with the pump chamber (26);
a bypass passageway (42) for establishing communication between the low pressure chamber (39a) and the high pressure chamber (39b) of the timer piston (39);
a control valve (43) for controlling the opening and closing state of the bypass passageway (42);
piston position detecting means (PS) for detecting the position of the timer piston (39); and
fuel injection timing changing means (17) which, when the engine is stopped, opens the bypass passageway (42) by means of the control valve (43) to allow the low pressure chamber (39a) and the high pressure chamber (39b) of the timer piston (39) to communicate with each other until a maximum retard angle position of the timer piston (39) is detected by the piston position detecting means (PS).

## Patentansprüche

1. Steuervorrichtung für den Kraftstoffeinspritzpunkt eines Dieselmotors mit:
einer Förderpumpe (23) zum Ansaugen und Zuführen einer konstanten Kraftstoffmenge aus einem Kraftstofftank (13),
einem Pumpeninnenraum (26) zum Einstellen des von der Kraftstoffpumpe (23) zugeführten Kraftstoffs auf einen bestimmten Kraftstoffdruck
einem Verteilerkolben (31) zum Aufnehmen einer bestimmten Kraftstoffmenge aus den Pumpeninnenraum (26) und zur Verteilung und Druckeinspeisung in Einspritzdüsen (14),
einem Spritzversteller (39) zum Steuern des Kraftstoffeinspritzpunkts vom Verteilerkolben (31), wobei der Spritzversteller (39) eine mit der Zufuhrseite der Förderpumpe (23) kommunizierende Niederdruckkammer (39a) und eine mit dem Pumpeninnenraum (26) kommunizierende Hochdruckkammer (39b) aufweist,
einer Bypassleitung (42) zum Herstellen einer Verbindung zwischen der Niederdruckkammer (39a) und der Hochdruckkammer (39b) des Spritzverstellers (39),
einem Steuerventil (43) zum Steuern des Öffnungs- und Schließzustands der Bypassleitung (42), und
einer Einrichtung (17) zum Ändern des Kraftstoffeinspritzpunkts, die beim Anhalten des Motors die Bypassleitung (42) mittels des Steuerventils (43) öffnet, um für eine bestimmte Zeit eine Verbindung zwischen der Niederdruckkammer (39a) und der Hochdruckkammer (39b) des Spritzverstellers (39) zuzulassen, und so den Spritzversteller (39) in die Start-Einspritzpunktstellung bewegt.

2. Vorrichtung nach Anspruch 1, wobei die Einrichtung (17) zum Verstellen des Kraftstoffeinspritzpunkts den Spritzversteller (39) in eine maximal verzögernde Winkelstellung bewegt.

3. Vorrichtung nach Anspruch 1, wobei der Pumpeninnenraum (26) und die Hochdruckkammer (39b) über einen Begrenzer (61) miteinander verbunden sind.

4. Vorrichtung nach Anspruch 1, wobei zwischen der Förderpumpe (23) und dem Pumpeninnenraum (26) ein Regulierventil (27) zum Einstellen des Kraftstofförderdrucks der Förderpumpe (23) vorgesehen ist, und in einer Kraftstoffrückführleitung vom Pumpeninnenraum (26) zum Kraftstofftank (13) eine Überströmdrossel (57) vorgesehen ist.

5. Vorrichtung nach Anspruch 1, wobei zum Erfassen der Stellung des Spritzverstellers (39) eine Einrichtung (PS) zur Verstellpositionserfassung vorgesehen ist, und das Verstellen der Spritzverstellerposition durch die Einrichtung (17) zum Verändern des Kraftstoffeinspritzpunkts beendet wird, wenn die Einrichtung (PS) zur Verstellpositionerfassung erfaßt, daß der Spritzversteller die Start-Einspritzpunktstellung einnimmt.

6. Steuervorrichtung für den Kraftstoffeinspritzpunkt eines Dieselmotors mit:
einer Förderpumpe (23) zum Ansaugen und Zuführen einer konstanten Kraftstoffmenge aus einem Kraftstofftank (13),
einem Pumpeninnenraum (26) zum Einstellen des von der Kraftstoffpumpe (23) zugeführten Kraftstoffs auf einen bestimmten Kraftstoffdruck
einem Verteilerkolben (31) zum Aufnehmen einer bestimmten Kraftstoffmenge aus den Pumpeninnenraum (26) und zur Verteilung und Druckeinspeisung in Einspritzdüsen (14),
einem Spritzversteller (39) zum Steuern des Kraftstoffeinspritzpunkts vom Verteilerkolben (31), wobei der Spritzversteller (39) eine mit der Zufuhrseite der Förderpumpe (23) kommunizierende Niederdruckkammer (39a) und eine mit dem Pumpeninnenraum (26) kommunizierende Hochdruckkammer (39b) aufweist,
einer Bypassleitung (42) zum Herstellen einer Verbindung zwischen der Niederdruckkammer (39a) und der Hochdruckkammer (39b) des Spritzverstellers (39),
einem Steuerventil (43) zum Steuern des Öffnungs- und Schließzustands der Bypassleitung (42),
einer Einrichtung (PS) zum Erfassen der Stellung des Spritzverstellers (39), und
einer Einrichtung (17) zum Ändern des Kraftstoffeinspritzpunkts, die beim Anhalten des Motors die Bypassleitung (42) mittels des Steuerventils (43) öffnet, um eine Verbindung zwischen der Niederdruckkammer (39a) und der Hochdruckkammer (39b) des Spritzverstellers (39) zuzulassen, bis eine maximal verzögernde Winkelstellung des Spritzverstellers (39) von der Einrichtung (PS) zur Verstellpositionserfassung erfaßt wird.

## Revendications

1. Dispositif de commande du calage d'injection de carburant d'un moteur Diesel comportant :
une pompe d'alimentation (23) pour aspirer et alimenter une quantité constante de carburant à partir d'un carburant stocké dans un réservoir de carburant (13),
une chambre de pompe (26) pour ajuster l'alimentation en carburant en provenance de la pompe d'alimentation (23) à une pression de carburant prédéterminée,
un plongeur de pompe (31) pour prélever une quantité prédéterminée de carburant dans la chambre de pompe (26) et la répartir et l'acheminer sous pression vers des buses d'injection (14),
un piston temporisateur (39) pour commander le calage d'injection de carburant par le plongeur de pompe (31), ledit piston temporisateur (39) ayant une chambre basse pression (39a) communiquant avec le côté amont de la pompe d'alimentation (23) et une chambre haute pression (39b) communiquant avec la chambre de pompe (26),
un passage de dérivation (42) pour établir une communication entre la chambre basse pression (39a) et la chambre haute pression (39b) du piston temporisateur (39),
une soupape de commande (43) pour commander l'état d'ouverture et de fermeture du passage de dérivation (42), et
des moyens de changement de calage d'injection de carburant (17) qui, lorsque le moteur est arrêté, ouvrent le passage de dérivation (42) par l'intermédiaire de la soupape de commande (43) pour permettre que la chambre basse pression (39a) et la chambre haute pression (39b) du piston temporisateur (39) communiquent l'une avec l'autre pendant un temps prédéterminé, décalant ainsi le piston temporisateur (39) vers la position de calage d'injection au démarrage.

2. Dispositif selon la revendication 1, dans lequel les moyens de changement de calage d'injection de carburant (17) déplacent le piston temporisateur (39) vers une position d'angle de retard maximum.

3. Dispositif selon la revendication 1, dans lequel la chambre de pompe (26) et la chambre haute pression (39b) communiquent l'une avec l'autre via un étrangleur (61).

4. Dispositif selon la revendication 1, dans lequel une soupape de régulation (27) destinée à ajuster la pression d'alimentation en carburant de la pompe d'alimentation (23) est disposée entre la pompe d'alimentation (23) et la chambre de pompe (26), et une soupape de trop-plein (57) est disposée dans un passage pour renvoyer du carburant depuis la chambre de pompe (26) vers le réservoir de carburant (13).

5. Dispositif selon la revendication 1, dans lequel des moyens de détection de position de piston (PS) sont prévus pour détecter la position du piston temporisateur (39), et lorsque les moyens de détection de position de piston (PS) détectent que la position du piston temporisateur est devenue la position de calage d'injection au démarrage, le déplacement de la position de piston temporisateur par les moyens de changement de calage d'injection de carburant (17) est arrêtée.

6. Dispositif de commande du calage d'injection de carburant d'un moteur Diesel, comportant :
une pompe d'alimentation (23) pour aspirer et alimenter une quantité constante de carburant à partir d'un carburant stocké dans un réservoir de carburant (13),
une chambre de pompe (26) pour ajuster l'alimentation en carburant en provenance de la pompe d'alimentation (23) à une pression de carburant prédéterminée,
un plongeur de pompe (31) pour prélever une quantité prédéterminée de carburant dans la chambre de pompe (26) et la répartir et l'acheminer sous pression vers des buses d'injection (14),
un piston temporisateur (39) pour commander le calage d'injection de carburant par le plongeur de pompe (31), ledit piston temporisateur (39) ayant une chambre basse pression (39a) communiquant avec le côté amont de la pompe d'alimentation (23) et une chambre haute pression (39b) communiquant avec la chambre de pompe (26),
un passage de dérivation (42) pour établir une communication entre la chambre basse pression (39a) et la chambre haute pression (39b) du piston temporisateur (39),
une soupape de commande (43) pour commander l'état d'ouverture et de fermeture du passage de dérivation (42),
des moyens de détection de position de piston (PS) pour détecter la position du piston temporisateur (39), et
des moyens de changement de calage d'injection de carburant (17) qui, lorsque le moteur est arrêté, ouvrent le passage de dérivation (42) par l'intermédiaire de la soupape de commande (43) pour permettre que la chambre basse pression (39a) et la chambre haute pression (39b) du piston temporisateur (39) communiquent l'une avec l'autre jusqu'à ce qu'une position d'angle de retard maximum du piston temporisateur (39) soit détectée par les moyens de détection de position de piston (PS).
